# EUROPÄISCHE PATENTSCHRIFT

(11) **EP 0 596 290 B1**
(45) Veröffentlichungstag und Bekanntmachung des Hinweises auf die Patenterteilung: **17.01.1996**
(21) Anmeldenummer: 93116604.5
(22) Anmeldetag: 14.10.1993
(51) Int. Cl.: C09D 133/12, C08J 7/04

(54) **Verwendung von Überzugsmassen auf der Basis von Polymethyl- methacrylat zur Erzielung rauher Oberflächenstruktur**
Use of coating compositions based on polymethyl methacrylate to obtain a rough surface structure
Utilisation des compositions de revêtement à base de polyméthyl méthacrylate pour obtenir une surface rugueuse

(30) Priorität: 04.11.1992 DE 4237209
(43) Veröffentlichungstag der Anmeldung: 11.05.1994
(73) Patentinhaber: BASF Aktiengesellschaft, D-67063 Ludwigshafen (DE)
(72) Erfinder: Deckers, Andreas, Dr., D-67063 Ludwigshafen (DE); Wagner, Daniel, Dr., D-67098 Bad Duerkheim (DE); Straub, Ferdinand, Dr., D-68766 Hockenheim (DE); Zimmer, Guenter, Dr., D-55129 Mainz (DE); Endlich, Karl-Ludwig, D-55120 Mainz (DE)

(56) Entgegenhaltungen:
- EP-A- 0 007 391
- FR-A- 1 363 438

## Beschreibung

Die vorliegende Erfindung betrifft die Verwendung von Mischungen aus
- (A) 80 bis 99 Gew.-%: eines Polymerisats auf der Basis von Methylmethacrylat,
- (B) 20 bis 1 Gew.-%: eines teilchenförmigen Polymerisates, mit einer Teilchengröße im Bereich von 1 - 50 µm, erhältlich durch Polymerisation eines vinylgruppenhaltigen Monomeren und
- (C) 0 bis 60 Gew.-%: bezogen auf (A) und (B), eines mehrstufigen Pfropfkautschukes auf der Basis eines Esters der Acrylsäure oder von Butadien
zur Herstellung von rauhen Überzugsmassen.

Polymethylmethacrylat ("PMMA") zeichnet sich bekanntermaßen im Vergleich zu anderen thermoplastischen Kunststoffen durch eine sehr gute Witterungsbeständigkeit, eine hohe Transparenz und eine hohe Oberflächenhärte aus. Aus diesem Grund werden Polymerisate auf Basis von PMMA häufig als Deckschichten oder Überzugsmassen, beispielsweise im Sanitärbereich, auf anderen Kunststoffen eingesetzt. Häufig ist jedoch die sehr glatte Oberfläche von Nachteil, so daß kein genügender Schutz - wie gegen Ausrutschen - gewährleistet ist.

In der EP-A 453,198 werden Mischungen aus PMMA mit teilchenförmigem, vernetztem PMMA beschrieben. Die Herstellung der vernetzten PMMA-Teilchen, die eine Kern-Schale-Struktur aufweisen, erfolgt gemäß dieser Schrift durch Emulsionspolymerisation, wobei die Teilchen einen Durchmesser von maximal 0,5 µm aufweisen. Die in der EP-A 453,198 beschriebenen Formmassen zeichnen sich durch eine im Vergleich zu reinem PMMA erhöhte Spanungsrißbeständigkeit aus. Die Oberflächenbeschaffenheit ändert sich gegenüber reinem PMMA jedoch nicht.

In den japanischen Anmeldungen JP-A 59/38252 und JP-A 59/38253 werden Mischungen aus PMMA und vernetzten PMMA-Teilchen, deren Teilchengrößen im Bereich von 10 bis 500 µm, insbesondere bei 100 µm, liegen, beschrieben. Aufgrund dieser Teilchengrößenverteilung sind die daraus hergestellten Formmassen so unregelmäßig, daß sie für eine Anwendung als Deckschicht für andere Kunststoffe nicht in Frage kommen.

Die Aufgabe der vorliegenden Erfindung war daher die Bereitstellung von rauhen Überzugsmassen auf der Basis von PMMA, die die oben erwähnten Nachteile nicht aufweisen.

Demgemäß wurden die eingangs definierten Formmassen gefunden.

Es wurde nun gefunden, daß Mischungen aus PMMA und teilchenförmigen Polymerisaten mit einem Durchmesser von 1 bis 50 µm die oben genannten Mängel nicht aufweisen. Die aus den erfindungsgemäßen Mischungen hergestellten Formmassen können zu rutschfesten und optisch gleichmäßigen Deckschichten und Überzugsmassen weiterverarbeitet werden. Darüberhinaus weisen sie in der Regel einen reduzierten Oberflächenglanz auf.

Die erfindungsgemäßen Mischungen setzen sich aus folgenden Komponenten zusammen:
- (A) 80 bis 99 Gew.-%: eines Polymerisats auf der Basis von Methylmethacrylat,
- (B) 20 bis 1 Gew.-%: eines teilchenförmigen Polymerisates, mit einer Teilchengröße im Bereich von 1-50, vorzugsweise 1-40 µm, erhältlich durch Polymerisation eines vinylgruppenhaltigen Monomeren und
- (C) 0 bis 60 Gew.-%: bezogen auf (A) und (B), eines mehrstufigen Pfropfkautschukes auf der Basis eines Esters der Acrylsäure oder von Butadien.

Als Polymerisat auf der Basis von Methylmethacrylat ("MMA") setzt man im allgemeinen reines PMMA oder bevorzugt ein Copolymer aus MMA und bis zu 20 Gew.-% eines eine Vinylgruppe tragenden Monomeren ein.

Solche vinylhaltigen Comonomere können Acrylate, Methacrylate, (Meth)Acrylnitril, Styrol und dessen Derivate, Vinylcarboxylate, Maleinsäure, Maleinsäureanhydrid sowie Acrylsäure und Methacrylsäure und deren Amide oder Imide sein. Bevorzugt sind Acrylate und Methacrylate mit C₁-C₄-Alkyl-, mit Ausnahme von Methylmethacrylat, C₅-C₈-Cycloalkyl-, vinylaromatischen sowie halogenierten C₁-C₂-Alkyl-Resten wie Methylacrylat, Ethyl(meth)acrylat, n-Propyl(meth)acrylat, n-Butyl(meth)acrylat, Cyclopentyl(meth)acrylat, Cyclohexyl(meth)acrylat, Phenyl(meth)acrylat, Ethylphenyl(meth)acrylat, Benzyl(meth)acrylat, Trifluormethyl(meth)acrylat.

Die Herstellung der PMMA-Komponente führt man in an sich bekannter Weise beispielsweise in Masse, Lösung, Suspension oder Emulsion durch. Bei der Herstellung durch Substanzpolymerisation kann man öllösliche Initiatoren (Radikalstarter wie Diacylperoxide, Perester, Peroxidicarbonate, Hydroperoxide, Dialkylperoxide oder Azoverbindungen wie Azo-bis-isobutyronitril) verwenden. Die Polymerisationstemperatur liegt im allgemeinen im Bereich von 20 bis 200°C, bevorzugt von 60 bis 160°C. Das Molekulargewicht kann man durch geeignete Kettenüberträger, beispielsweise Mercaptane, oder durch eine geeignete Temperaturführung regulieren. Im allgemeinen wählt man Molekulargewichte im Bereich von 20.000 bis 500.000, bevorzugt von 50.000 bis 150.000 g/mol (Gewichtsmittelwert des Molekulargewichts).

Die Herstellung der Polymerisate kann auch durch Lösungspolymerisation erfolgen. Geeignete Lösungsmittel sind beispielsweise Toluol, Xylol, Aceton oder Tetrahydrofuran. Im übrigen kann man die Polymerisation unter den für die Substanzpolymerisation geschilderten Bedingungen durchführen.

Die Herstellung der Polymerisate durch Suspensionspolymerisation führt man in der Regel in Gegenwart von Schutzkolloiden wie Polyvinylpyrrolidon, Polymethacrylsäure, Polyvinylalkohol oder Methylcellulose durch.

Als Initiatoren kann man in der Regel die für die Substanzpolymerisation beschriebenen öllöslichen Radikalstarter einsetzen. Die Reaktionstemperatur wählt man hierbei iom allgeimeinen im Bereich von 60 bis 160°C.

Bei der Herstellung durch Emulsionspolymeristion führt man die Reaktion zweckmäßigerweise bei Temperaturen im Bereich von 20 bis 120°C durch. Als Initiatoren kann man thermisch zerfallende wasserlösliche Initiatoren wie Natriumperoxodisulfat oder Ammoniumperoxodisulfat oder auch Redox-Systeme wie tert.-Butylhydroperoxid/Natriumformaldehydsulfoxylat verwenden. Als Emulgatoren setzt man in der Regel die üblichen Verbindungen ein, wie die Alkalimetallsalze von Fettsäuren, Natriumalkylsulfonate oder o-Do-decyldiphenyletherdisulfonat.

Nähere Ausführungen zu diesem Verfahren finden sich beispielsweise in Kunststoff-Handbuch, Band IX, "Polymethacrylate", Carl Hanser Verlag, München, 1975, S. 15 ff, 31 ff.

Die Komponente A) setzt man erfindungsgemäß in einer Menge im Bereich von 80 bis 99, vorzugsweise von 90 bis 98 Gew.-% ein.

Als Komponente B) setzt man erfindungsgemäß teilchenförmige Polymerisate ein, vorzugsweise erhältlich aus den folgenden Monomeren:
- b1) 90 bis 99,9,: bevorzugt von 95 bis 99,5 Gew.-%, eines vinylgruppenhaltigen Monomeren,
- b2) 0,1 bis 10,: vorzugsweise 0,5 bis 5 Gew.-%, einer Verbindung mit mindestens zwei radikalisch polymerisierbaren Doppelbindungen.

### Als vinylgruppenhaltige Monomere kann man

C₁-C₁₈-Alkylester der Methacrylsäure oder Acrylsäure, wie Methylacrylat, Ethylacrylat, n-Propylacrylat, n-Butylacrylat, n-Pentylacrylat, n-Hexylacrylat, n-Heptylacrylat, n-Octylacrylat, Stearylacrylat, Methylmethacrylat, Ethylmethacrylat, n-Propylmethacrylat, n-Butylmethacrylat, tert.-Butylmethacrylat, n-Pentylmethacrylat, n-Hexylmethacrylat, n-Heptylmethacrylat, n-Octylmethacrylat, Stearylmethacrylat, bevorzugt die C₁-C₄-Alkylester wie Methylacrylat, Ethylacrylat, n-Propylacrylat, n-Butylacrylat, Methylmethacrylat, Ethylmethacrylat, n-Propylmethacrylat, n-Butylmethacrylat, Styrol sowie dessen einfach oder mehrfach kernsubstituierten Derivate, beispielsweise 4-Methylstyrol, 4-Ethylstyrol, 4-Isopropylstyrol, 3,4-Dimethylstyrol, 4-Chlorstyrol, 4-Bromstyrol, 3,4-Dichlorstyrol, besonders bevorzugt Styrol,
sowie Maleinsäure und deren Derivate wie Maleinsäureanhydrid und Maleinsäureimide einzusetzen.

Als Verbindung mit mindestens zwei radikalisch polymerisierbaren Doppelbindungen seien beispielhaft genannt:
Alkylenglykoldi(meth)acrylate wie Ethylenglykoldi(meth)acrylat, 1,2-Propandioldi(meth)acrylat, 1,3-Propandioldi(meth)acrylat, 1,3-Butandioldi(meth)acrylat, 1,4-Butandioldi(meth)acrylat, Oligo- und Polyethylenglykoldi(meth)acrylat,
Acrylate und Methacrylate von Glycerin, Trimethylolpropan, Pentaerythrit, Inosit und ähnliche Zuckeralkohole,
Allylacrylat und Allylmethacrylat,
Acryl- und Methacrylamide von Ethylendiamin und andere aliphatische Di- und Polyamine,
Triallylcyanurat und Triallylisocyanurat sowie
Vinylbenzole wie Divinylbenzol und Trivinylbenzol.

Die Monomeren b2) dienen als Vernetzungsmittel. Sie werden aufgrund ihrer Eigenschaft, sich gleichmäßig in die polymere Phase einzubauen, auch als "Polymerisationsvernetzer" bezeichnet. Während der Polymerisationsreaktion ist die Geschwindigkeit ihres Verbrauchs im wesentlichen vergleichbar mit derjenigen des Hauptmonomeren, wodurch eine Vernetzung innerhalb der Phase zustande kommt.

Die Herstellung der Komponente B), die man auch als Perlpolymerisat bezeichnen kann, erfolgt bevorzugt nach einem speziellen Suspensions-Verfahren, der sogenannten Mikro-Suspensions-Polymerisation. Dieses Verfahren ist beispielsweise in der EP-A 443,609 ausführlich beschrieben, so daß sich nähere Ausführungen hierzu erübrigen. Die nach diesem Verfahren hergestellten Perlpolymerisat-Dispersionen können nach den üblichen Methoden ausgefällt, getrocknet und mit der Komponente A), beispielsweise auf einem Extruder, vermischt werden.

Die Komponente B) setzt man erfindungsgemäß in einer Menge im Bereich von 20 bis 1, vorzugsweise von 10 bis 2 Gew.-% ein.

Den Komponenten A) und B) kann man 0 bis 60 Gew.-%, vorzugsweise 0 bis 45 Gew.-%, eines mehrstufigen Pfropfkautschuks (Komponente C) auf der Basis eines Esters der Acrylsäure oder von Butadien zumischen, was in der Regel die Schlagzähigkeit erhöht und die Sprödigkeit senkt.

Beispielsweise kann man als Komponente C) ein mehrstufig hergestelltes Emulsionspolymerisat auf der Basis eines Acrylates oder Methacrylates einsetzen. Bevorzugt verwendet man solche Emulsionspolymerisate, die eine elastomere Phase mit einer Glasübergangstemperatur von kleiner als 25°C und eine äußere, harte, nicht-elastomere Phase mit einer Glasübergangstemperatur von mindestens 50°C aufweisen, wobei der mittlere Teilchendurchmesser in der Regel im Bereich von 10 bis 1000 nm, bevorzugt 50 bis 500 nm, besonders bevorzugt 100 bis 500 nm, liegt.

Die nicht-elastomere, harte Phase ist vorzugsweise in dem Fall, daß es sich um die erste Stufe (Kern) oder eine Zwischenstufe handelt, erhältlich aus einem Monomerengemisch aus

| | |
|---|---|
| 79,49 bis 99,49, | bevorzugt von 90 bis 98 Gew.-% Methylmethacrylat, |
| 0,5 bis 5, | bevorzugt von 1 bis 5 Gew.-% eines C₁-C₄-Alkylacrylates, |
| 0 bis 20, | bevorzugt von 0 bis 10 Gew.-% sonstiger Comonomere, |
| 0 bis 5, | bevorzugt von 0 bis 2 Gew.-% eines mischpolymerisierbaren polyfunktionellen vernetzenden Monomeren und |
| 0,01 bis 5, | bevorzugt von 0,1 bis 2 Gew.-% eines mischpolymerisierbaren pfropfvernetzenden Monomeren, |

und für den Fall, daß es sich um die äußere Hülle handelt, bevorzugt erhältlich aus einem Monomerengemisch aus

| | |
|---|---|
| 79,45 bis 93, | bevorzugt von 90 bis 98 Gew.-% Methylmethacrylat, |
| 0,5 bis 5, | bevorzugt von 1 bis 5 Gew.-% eines C₁-C₄-Alkylacrylates, |
| 0 bis 20, | bevorzugt von 0 bis 10 Gew.-% sonstiger Comonomere, |
| 0,05 bis 2, | bevorzugt von 0,1 bis 0,5 Gew.-% eines Übertragungsreglers. |

Die elastomere Phase ist vorzugsweise erhältlich aus einem Monomerengemisch aus

| | |
|---|---|
| 55,01 bis 89,99, | bevorzugt von 70 bis 85 Gew.-% mindestens einem C1-C₂₀-Alkylester der Acrylsäure, |
| 10 bis 39,99, | bevorzugt von 10 bis 30 Gew.-% mindestens eines vinylaromatischen Monomeren, |
| 0 bis 5, | bevorzugt von 0 bis 2 Gew.-% mindestens eines mischpolymerisierbaren polyfunktionellen vernetzenden Monomeren und |
| 0,01 bis 5, | bevorzugt von 0,1 bis 2 Gew.-% mindestens eines mischpolymerisierbaren pfropfvernetzenden Monomeren. |

Der Anteil der elastomeren Phase im Pfropfpolymerisat beträgt in der Regel 40 bis 75 Gew.-%. Besonders bevorzugt sind zwei- bis fünfstufig hergestellte Pfropfpolymerisate.

Als C₁-C₄-Alkylacrylate kommen Methylacrylat, Ethylacrylat, n-Propylacrylat, i-Propylacrylat, n-Butylacrylat, i-Butylacrylat, sek.-Butylacrylat und tert.-Butylacrylat in Betracht, vorzugsweise Methyl-, Ethyl- und n-Butylacrylat.

Als sonstige Comonomere kann man weitere mit den obengenannten Monomeren copolymerisierbare Comonomere wie Styrol, alpha-Methylstyrol, Vinylchlorid, Vinylidenchlorid, Maleinsäure, Maleinsäureester wie Maleinsäuredimethylester, Maleinsäurediethylester, Maleinsäuredi-n-propylester, Maleinsäuredi-i-propylester, Maleinsäurediallylester oder Maleinsäuredicyclohexylester, Acrylnitril, Methacrylnitril, (Meth)Acrylamide, Itakonsäure, Itakonsäureester wie Itakonsäuredimethylester, Itakonsäurediethylester, Itakonsäuredi-n-propylester und Itakonsäuredi-i-propylester sowie Vinylacetat einsetzen.

Als mischpolymerisierbare polyfunktionelle vernetzende Monomere seien beispielhaft aufgeführt Alkylenglykoldi(meth)acrylate wie Ethylenglykoldi(meth)acrylat, 1,2-Propandioldi(meth)acrylat, 1,3-Propandioldi(meth)acrylat, 1,3-Butandioldi(meth)acrylat, 1,4-Butandioldi(meth)acrylat, Oligo- und Polyethylenglykoldi(meth)acrylat,
Acrylate und Methacrylate von Glycerin, Trimethylolpropan, Pentaerythrit, Inosit und ähnliche Zuckeralkohole,
Acryl- und Methacrylamide von Ethylendiamin und andere aliphatische Di- und Polyamine,
Triallylcaynurat und Triallylisocyanurat sowie
Vinylbenzole wie Divinylbenzol und Trivinylbenzol.

Diese Comonomeren dienen als Vernetzungsmittel. Sie werden aufgrund ihrer Eigenschaft, sich gleichmäßig in die polymere Phase einzubauen, auch als "Polymerisationsvernetzer" bezeichnet. Während der Polymerisationsreaktion ist die Geschwindigkeit ihres Verbrauchs im wesentlichen vergleichbar mit derjenigen des Hauptmonomeren, wodurch eine Vernetzung innerhalb der Phase zustande kommt.

Als copolymerisierbare pfropfvernetzende Monomere eignen sich Dicyclopentadienyl und Allyl-, Methallyl- und Crotylester einer α,β-ungesättigten Carbonsäure oder Dicarbonsäure, bevorzugt Allylmethacrylat.

Solche pfropfaktiven Comonomere sorgen für eine äußere Vernetzung und bewirken beim Aufbau eines Emulsionspfropfcopolymerisates beispielsweise die Verknüpfung der Kernphase mit der nachfolgenden Polymerisationsstufe. Pfropfvernetzer wie Allylmethacrylat zeigen dieses Verhalten, weil eine polymerisierbare Doppelbindung (Doppelbindung des Säureteils) mit vergleichbarer Geschwindigkeit wie das Hauptmonomere (Methylmethacrylat) polymerisiert. Dagegen reagiert die Doppelbindung der Allylgruppe mit einer deutlich niedrigeren Polymerisationsgeschwindigkeit, so daß am Ende der Polymerisation einige dieser Doppelbindungen unverändert in der Kernphase erhalten bleiben, wodurch eine Pfropfvernetzung zwischen zwei Phasen möglich ist.

Weniger als 0,01 und mehr als 5 Gew.-% an pfropfvernetzenden Monomeren in der Komponente C führen nach den bisherigen Beobachtungen zu unzureichenden Schlagzähigkeitswerten.

Als Übertragungsregler kann man Verbindungen wie Thioessigsäure und deren C₁-C₃-Alkylester und Mercaptane, bevorzugt C₁-C₁₅-Alkylmercaptane wie Methyl-, Ethyl-, n-Propyl-, n-, sek.-Butyl-, n-Pentyl-, n-Hexyl-, n-Heptyl-, n-Octyl-, n-Nonyl-, n-Decyl-, n-Undecy-, n-, i-, tert.-Dodecyl-, n-Tridecyl-, n-Tetradecyl- und n-Pentadecyl-mercaptan, bevorzugt tert.-Butyl-, n- und i-Dodecylmercaptan, besonders bevorzugt n-Dodecylmercaptan, einsetzen.

Die Mitverwendung eines Übertragungsreglers bewirkt im allgemeinen einerseits, daß die Kettenlänge bei der Polymerisation der Endphase begrenzt wird, und andrerseits, daß der Regler als Endgruppe eingebaut wird. Auf diese Weise kann das Molekulargewicht der äußeren, harten Phase dem der Komponenten A) und B) angepaßt werden. Insgesamt erhöht sich so in der Regel die thermische Stabilität.

Unter den Acrylsäure-C₁-C₂₀-alkylestern sind die C₁-C₁₀-Alkylester wie Methyl-, Ethyl-, n-, i-Propyl, n-, sek.-, i-, tert.-Butyl-, n-, neo-Pentyl, n-Hexyl-, n-Heptyl-, n-Octyl-, n-Nonyl-, n-Decylacrylat, bevorzugt, wobei n-Butylacrylat und 2-Ethylhexylacrylat sowie deren Mischungen besonders bevorzugt sind.

Als vinylaromatische Monomere kann man Styrol, alpha-Methylstyrol, tert.-Butylstyrol, Monochlorstyrol, Vinyltoluol sowie (Meth)Acrylsäurephenyl-C₁-C₄-alkylester, wobei die Phenylgruppe bis zu dreifach mit C₁-C₄-Alkyl oder C₁-C₄-Cycloalkyl substituiert sein kann, wie Benzylacrylat, p-Tolylacrylat, 2-, 4-Methoxyphenylacrylat, Phenethylacrylat, Phenylpropylacrylat und Phenylbutylacrylat, bevorzugt Phenethylacrylat und Phenylpropylacrylat, oder Mischungen davon verwenden, bevorzugt Styrol.

Vinylaromatische Monomere erhöhen in der Regel den Brechungsindex. So kann man hierdurch den Brechungsindex der elastomeren Phasen an den der harten Phasen angleichen. Ferner kann man durch die vinylaromatischen Monomeren auch den Brechungsindex des Emulsionspolymerisats C) an denjenigen der Komponenten A) und B) anpassen.

Die Emulsionspfropfcopolymerisate C) kann man in an sich bekannter Weise nach der Methodik der Emulsionspfropfpolymerisation, die auch als Saatlatex-Verfahren bezeichnet wird, in zwei bis fünf aufeinanderfolgenden Stufen herstellen, wobei die Latexteilchen bis zum Abschluß der Endstufe im emulgierten Zustand verbleiben (s. Houben-Weyl, Methoden der organischen Chemie, Band XXI, 1 (1961), Seiten 133 bis 406).

Durch das polymere Produkt im Saatlatex wird der Gesamtgehalt an Teilchen in den zwei-, drei-, vier- oder fünfstufigen Endprodukten festgelegt. Das bedeutet, daß nach der ersten Polymerisationsstufe weitere Teilchen nicht neu gebildet werden und der Teilchengehalt annähernd konstant bleibt.

Durch Verwendung von Emulgatoren läßt sich die Teilchengröße sowohl des Kernlatex als auch der Latexteilchen in den Zwischenstufen festlegen, wobei Emulgatorart und -konzentration bestimmend sind.

Es können anionogene und nicht ionogene Emulgatoren verwendet werden.

### Geeignete Emulgatoren sind beispielsweise

Dioctylnatriumsulfosuccinat, Natriumlaurylsulfat, Natriumdodecylbenzolsulfonat, Alkylphenoxypolyethylensulfonate und Salze von langkettigen Carbon- und Sulfonsäuren.

### Als nichtionogene Emulgatoren sind beispielsweise

Fettalkoholpolyglykolether, Alkylarylpolyglykolether, Fettsäuremonoethanolamide sowie ethoxylierte Fettsäureamide und -amine geeignet.

Bezogen auf das Gesamtgewicht des Emulsionspfropfcopolymerisates C) liegt die Gesamtemulgatormenge vorzugsweise bei 0,05 bis 5 Gew.-%.

### Als Polymerisationsinitiatoren können

Ammonium- und Alkaliperoxodisulfate wie Kaliumperoxodisulfat sowie
Initiatorkombinationssysteme wie Natriumpersulfat-Natriumhydrosulfit, Kaliumpersulfat-Natriumformaldehydsulfoxylat und Kaliumperoxodisulfat-Natriumdithionit-Eisen-II-sulfat
verwendet werden, wobei die Polymerisationstemperatur im Fall der thermisch zu aktivierenden Ammonium- und Alkaliperoxodisulfate bei 50 bis 100°C und bei den Initiatorkombinationen, die als Redoxsysteme wirksam sind, darunter liegen kann, etwa im Bereich von 20 bis 50°C.

Die gesamte Initiatormenge liegt vorzugsweise zwischen 0,02 und 0,5 Gew.-%, bezogen auf das fertige Emulsionscopolymerisat C). Neben dem Übertragungsregler, der bei der Polymerisation der äuβeren harten Schale verwendet wird, kann die Polymerisation des Kerns und der übrigen Schalen ebenfalls in Gegenwart eines Reglers durchgeführt werden. Die Gesamtreglermenge liegt zwischen 0,05 bis 2 Gew.-%, bezogen auf das Gesamtgewicht des Polymerisates.

Im allgemeinen empfiehlt es sich, den pH-Wert konstant zu halten, weswegen die Mitverwendung eines Puffers zweckmäßig ist. Üblich sind Salze der Phosphorsäure, z.B. Mischungen von Kaliumdihydrogenphosphat und Dinatriumhydrogenphosphat; es können auch ammoniakalische Lösungen verwendet werden.

Die Polymerisation kann bei einer Temperatur im Bereich von 70 bis 100°C durchgeführt werden, wobei eine Temperatur von 85 bis 95°C bevorzugt ist. Bei Temperaturen unter 70°C verlängern sich die Polymerisationszeiten, bei Temperaturen über 100°C ist es erforderlich, die Polymerisation unter Druck durchzuführen.

Im übrigen werden die erfindungsgemäßen Emulsionspfropfcopolymerisate im allgemeinen so hergestellt, daß man eine wäßrige Mischung, bestehend aus Monomeren, Vernetzer, Emulgator, Initiator, Regler und einem Puffersystem in einem mit Stickstoff inertisierten Reaktor vorlegt, in der Kälte unter Rühren inertisiert und dann für etwa 15 bis 120 Minuten auf die Polymerisationstemperatur bringt. Auf diese Weise wird zunächst durch Emulgierung und Polymerisation des Kernmonomerengemisches der Kernlatex gebildet. Die weiteren Stufen werden jeweils unter Zulauf der Monomeren in Gegenwart der bereits gebildeten Stufe durch Emulsionspolymerisation erzeugt, wobei es zweckmäßig ist, die Monomeren zuvor unter Rühren im wäßrigen Medium zu emulgieren.

Zweckmäßig erfolgt der Zulauf einer weiteren Stufe erst dann, wenn die Polymerisation der vorhergehenden Stufe abgeschlossen ist, wodurch eine Durchmischung der einzelnen Stufen unterdrückt und ein reiner zwei-, drei-, vier- oder fünfstufiger Aufbau der Emulsionspfropfcopolymerisate C) gewährleistet wird. Dadurch kann eine Nachreaktionszeit von 15 bis 120 Minuten nach Zulaufen der jeweiligen Stufe und vor Beginn des Zulaufs der nächsten Stufe erforderlich sein.

Die Isolierung der Emulsionspfropfcopolymerisate C) aus dem erhaltenen Latex erfolgt in der Regel auf bekannte Weise durch Ausfällung, Filtration und anschließender Trocknung. Für die Ausfällung können beispielsweise wäßrige Lösungen von anorganischen Salzen wie Natriumchlorid, Natriumsulfat, Magnesiumsulfat und Calciumchlorid, wäßrige Lösungen von Salzen der Ameisensäure wie Magnesiumformiat, Calciumformiat und Zinkformiat, wäßrige Lösungen von anorganischen Säuren wie Schwefel- und Phosphorsäure sowie wäßrige ammoniaklische und aminische Lösungen sowie andere wäßrige alkalische Lösungen, z.B. von Natrium- und Kaliumhydroxid verwendet werden.

Die Trocknung kann beispielsweise durch Gefrier-, Sprüh-, Wirbelschicht- und Umlufttrocknung erfolgen.

Neben den erfindungsgemäßen Komponenten A), B) und C) können die Formmassen übliche Zusatzstoffe und Verarbeitungshilfsmittel enthalten. Deren Anteil beträgt in der Regel bis zu 5, vorzugsweise bis zu 2 Gew.-%, bezogen auf das Gesamtgewicht der Komponenten A) bis C).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe, Pigmente, Weichmacher, Antistatika und Flammschutzmittel.

Oxidationsverzögerer und Wärmestabilisatoren, die den thermoplastischen Massen gemäß der Erfindung zugesetzt werden können, sind z.B. Halogenide ausgewählt aus der Gruppe von Metallen der Gruppe I des Periodensystems, z.B. Lithium-, Natrium-, Kalium-Halogenide, und Kupfer-(I)-Halogenide, z.B. Chloride, Bromide oder Iodide, oder Mischungen davon. Weiterhin kann man Zinkfluorid und Zinkchlorid verwenden. Ferner kann man sterisch gehinderte Phenole, Hydrochinone, substituierte Vertreter dieser Gruppe und Mischungen dieser Verbindungen, vorzugsweise in Konzentrationen bis zu 1 Gew.-%, bezogen auf das Gewicht der Mischung, einsetzen.

Beispiele für UV-Stabilisatoren sind substituierte Resorcine, Salicylate, Benzotriazole und Benzophenone, die man im allgemeinen in Mengen bis zu 2 Gew.-% einsetzen kann. Gleit- und Entformungsmittel, die man in der Regel bis zu 1 Gew.-% der thermoplastischen Masse zusetzen kann, sind beispielsweise Stearinsäure, Stearylalkohol, Stearinsäurealkylester und -amide sowie Ester des Pentaerythrits mit langkettigen Fettsäuren. Geeignete Farbstoffe können die üblichen organischen Farbstoffe, organische Pigmente und Lacke sowie anorganische Pigmente wie Titandioxid, Cadmiumsulfid sein. Als Weichmacher seien Dioctylphthalat, Dibenzylphthalat und Butylbenzylphthalat genannt.

Als Flammschutzmittel kann man beispielsweise eine phosphorhaltige Verbindung in Mengen üblicherweise im Bereich bis zu 25 Gew.-%, bezogen auf das Gesamtgewicht, einsetzen.

Solche Flammschutzmittel sind beispielsweise sind organische Phosphorverbindungen wie die Ester der Phosphorsäure, phosphorigen Säure und von Phosphon- und Phosphinsäure sowie tertiäre Phosphine und Phosphinoxide. Als Beispiel sei Triphenylphosphinoxid genannt.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureamide, Phosphinsäureamide, Tris-(aziridinyl)-phosphinoxid oder Tetrakis-(hydroxymethyl)-phosphoniumchlorid.

Die Zugabe der Zusatzstoffe kann man in jeder Stufe der Herstellung durchführen, zweckmäßig gibt man die Stabilisatoren frühzeitig zu, um die Formmasse schon zu Beginn schützen zu können. In Übereinstimmung damit, gibt man im allgemeinen die Stabilisatoren schon während des Polymerisationsverfahrens zu, soweit sie dieses Verfahren nicht stören.

Die Herstellung der erfindungsgemäßen Formmassen führt man in der Regel nach an sich bekannten Verfahren durch, indem man die Ausgangskomponenten in üblichen Mischvorrichtungen entweder in der Schmelze wie in Schneckenextrudern, statischen Mischern oder Knetern mischt und anschließend austrägt, oder in fester Form die Komponenten in Brabender- oder Banbury-Mischer einbringt und dort unter Aufschmelzen mischt und anschließend extrudiert. Danach kühlt man die Formmasse im allgemeinen ab und zerkleinert sie. Die Mischtemperaturen wählt man in der Regel im Bereich von 180 bis 300°C, bevorzugt von 200 bis 280°C. Man kann auch die Komponenten als Dispersion herstellen, sie in dieser Form mischen, gemeinsam fällen und entwässern, und dann, wie oben beschrieben, mittels Extruder oder Kneter weiterverarbeiten.

Die Formmassen kann man nach üblichen Methoden weiterverarbeiten, z.B. durch Spritzguß, Extrusion oder Sintern, oder man bringt sie beispielsweise durch Coextrusion oder als Lack auf die zu schützende Trägermasse als Abdeckung oder Deckschicht auf.

Die erfindungsgemäßen Mischungen eignen sich daher bevorzugt als Überzugsmasse auf verschiedene Unterlagen, bevorzugt auf Kunststoffe wie Styrol-Acrylnitril-(SAN)-, Acrylnitril-Butadien-Styrol- (ABS)-, Acrylnitril- Styrol-Acrylester-(ASA)-Copolymerisate sowie Polycarbonate und Polyester.

### Beispiele

Für die folgenden Beispiele wurde als Komponente A) ein Copolymer gebildet aus 99 Gew.-% Methylmethacrylat und 1 Gew.-% Methylacrylat mit einer Viskositätszahl von 72 (gemessen in Chloroform nach DIN 7745) verwendet.

Als Komponente B) wurde ein Perl(co)polymerisat, gebildet aus 97 Gew.-% MMA und 3 Gew.-% Butandioldimethacrylat, verwendet:

### Beispiel 1

### Herstellung eines Perlpolymerisats (Komponente B)

Eine Mischung, bestehend aus
einer Wasserphase (1300 g Wasser, 12 g Dispergator (1,6 gew.-%ige Lösung eines Copolymeren aus 65 Gew.-% Methacrylsäure und 35 Gew.-% MMA, mit Natronlauge auf pH 7 neutralisiert) und 400 g eines teilverseiften Polyvinylacetats (Viskosität 40 mPa·sec, Verseifungsgrad 88 mol-%, Esterzahl 140 mg KOH/g), das als Hilfsdispergator dient und mit der Bezeichnung Mowiol 40-81^{®} (Fa. Hoechst) auf dem Markt erhältlich ist, und

einer Monomerphase (873 g MMA, 27 g Butandioldimethacrylat, 0,15 g tert.-Butylperpivalat, 0,58 g Dilauroylperoxid, 0,29 g tert.-Butylperoxineodecanoat und 4,5 g tert.-Dodecylmercaptan) wurde bei Raumtemperatur 30 min lang unter starkem Rühren (Dispenser-Rührer, Durchmesser 5 cm, 3500 U/min) dispergiert. Anschließend wurde die Reaktionsmischung unter leichtem Rühren (Ankerrührer, 150 U/min) auf 67°C erwärmt. Nach 2,5 h Rühren bei 67°C wurde die Reaktionsmischung zunächst 1 h bei 75°C und dann eine weitere Stunde bei 85°C weitergerührt. Danach wurde die erhaltene Dispersion durch Gefrierkoagulation ausgefällt. Anschließend wurde der ausgefällte Feststoff durch Zentrifugieren von der flüssigen Phase getrennt und schließlich getrocknet.

Die Teilchengröße wurde mittels Lichstreuung mit einem Meßgerät der Fa. Malvern ("Mastersizer") ermittelt und lag im Bereich von 1 bis 18 µm, wobei 80% der Teilchen eine Größe im Bereich von 2 bis 6 µm aufwiesen.

### Beispiel 2

Beispiel 1 wurde wiederholt, mit dem Unterschied, daß kein Hilfsdispergator zugesetzt wurde. Die Teilchengröße lag im Bereich von 10 bis 40 µm, wobei 78% der Teilchen eine Größe im Bereich von 20 bis 30 µm aufwiesen.

### Vergleichsbeispiel

Beispiel 2 wurde wiederholt, mit dem Unterschied, daß nur 6 g Dispergator eingesetzt wurden. Die Teilchengröße lag im Bereich von 100 bis 400 µm, wobei 76% der Teilchen eine Größe im Bereich von 100 bis 300 µm aufwiesen.

Die Perlpolymerisate aus den Beispielen 1 und 2 und dem Vergleichsbeispiel wurden zu 5 Gew.-% in die PMMA-Komponente A) eingearbeitet, indem entsprechende Dispersionen hergestellt und gemischt wurden. Nach dem Mischen wurde die Polymermischung durch Gefrierkoagulation ausgefällt, filtriert und getrocknet.

Die Bestimmung der Oberflächenqualität erfolgte visuell.

Die Ermittlung des Oberflächenreibwertes erfolgte mittels eines Reibwertmeßgerätes. Hierzu wurde nach dem Auflegen des Prüfkörpers (Rundscheibe mit 80 mm Durchmesser und 6 mm Höhe) auf einen Meßtisch ein Meßstift mit konstanter Geschwindigkeit (8 mm/sec) und kontinuierlich ansteigender Auflagekraft über die Prüfkörperoberfläche bewegt (Meßweg 40 mm). Als Meßergebnis wurde die Reibkraft erhalten.

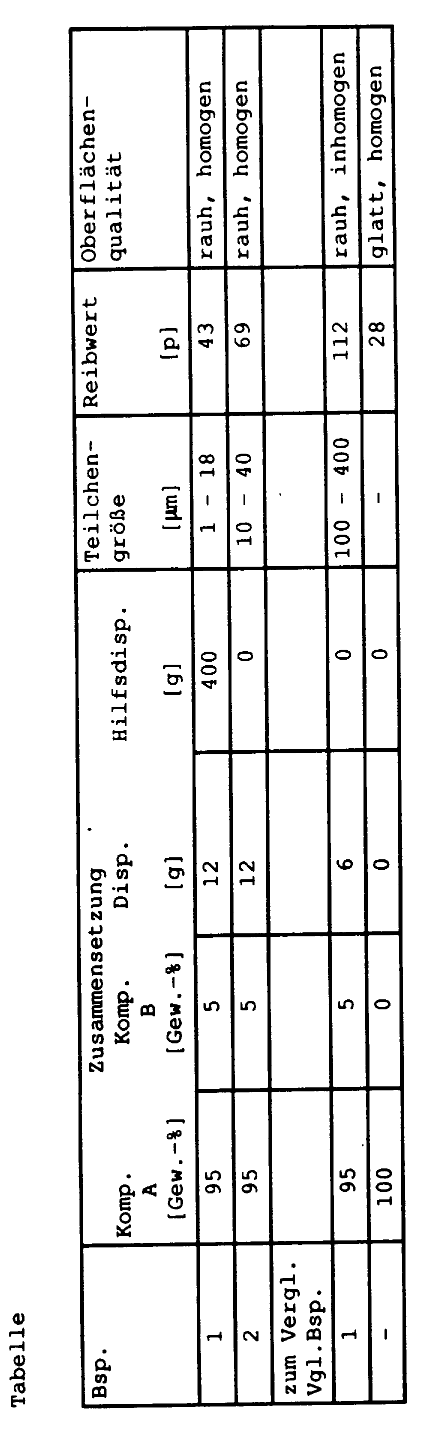

## Patentansprüche

1. Verwendung von Mischungen aus
(A) 80 bis 99 Gew.-% eines Polymerisates auf der Basis von Methylmethacrylat,
(B) 20 bis 1 Gew.-% eines teilchenförmigen Polymerisates, mit einer Teilchengröße im Bereich von 10 bis 50 µm, erhältlich durch Polymerisation eines vinylgruppenhaltigen Monomeren und
(C) 0 bis 60 Gew.-%, bezogen auf (A) und (B), eines mehrstufigen Pfropfkautschukes auf der Basis eines Esters der Acrylsäure oder von Butadien
zur Herstellung von rauhen Überzugsmassen.

## Claims

1. The use of a mixture comprising
(A) from 80 to 99% by weight of a polymer based on methyl methacrylate,
(B) from 20 to 1% by weight of a particulate polymer having a particle size in the range from 10 to 50 µm which is obtainable by polymerization of a monomer which contains vinyl groups, and
(C) from 0 to 60% by weight, based on (A) and (B), of a multistage graft rubber based on an ester of acrylic acid or on butadiene
for the production of rough coating compositions.

## Revendications

1. Utilisation de mélanges de
(A) 80 à 99% en poids d'un polymère à base de méthacrylate de méthyle,
(B) 20 à 1% en poids d'un polymère en particules avec une granulométrie dans la gamme de 10 à 50 µm, obtenu par polymérisation d'un monomère contenant des groupements vinyle et
(C) 0 à 60% en poids par rapport à (A) et (B) d'un caoutchouc greffé, préparé en plusieurs étapes, à base d'un ester d'acide acrylique ou de butadiène,
pour la préparation de compositions de revêtement rugueuses.
